# EUROPÄISCHE PATENTSCHRIFT

(11) **EP 1 897 513 B1**
(45) Veröffentlichungstag und Bekanntmachung des Hinweises auf die Patenterteilung: **26.08.2015**
(21) Anmeldenummer: 07011146.3
(22) Anmeldetag: 06.06.2007
(51) Int. Cl.: A61C 13/16

(54) **Küvette**
Vessel
Cuvette

(30) Priorität: 06.09.2006 DE 102006041790
(43) Veröffentlichungstag der Anmeldung: 12.03.2008
(73) Patentinhaber: Ivoclar Vivadent AG, 9494 Schaan (LI)
(72) Erfinder: Wachter, Wolfgang, 9494 Schaan (LI); Pokorny, Walter, 6719 Gais (AT)
(74) Vertreter: Baronetzky, Klaus

(56) Entgegenhaltungen:
- DE-A1- 1 779 104
- DE-A1- 2 615 938
- GB-A- 2 224 460
- US-A- 5 672 305
- "ENTLUEFTUNGSSTOPFEN FUER SPRITZGIESSWERKZEUGE" KUNSTSTOFFE, CARL HANSER VERLAG, MUNCHEN, DE, Bd. 74, Nr. 2, Februar 1984 (1984-02), Seite 68, XP001176448 ISSN: 0023-5563

## Beschreibung

Die Erfindung betrifft eine Küvette zum Herstellen von dentalmedizinischen Formteilen, gemäß dem Oberbegriff von Anspruch 1, die insbesondere als Spritzgussform dient und hierzu zwei aufeinander drückbare Küvettenformschalen aufweist.

Küvetten für die Herstellung von dentalmedizinischen Formteilen sind seit langem bekannt. Derartige Formteile werden häufig als Präzisions-Formteile aus einem polymerisierbaren Kunststoff hergestellt, der über mindestens einen Füllkanal in den Formraum eingebracht wird.

Eine derartige Küvette ist beispielsweise aus der US-PS 2,806,253 bekannt. Bei einer derartigen Lösung wird die Küvette mit den Küvettenformschalen in einem Spannrahmen fixiert, und das polymerisierbare Material wird über einen Stempel, der in dem Kühlkanal läuft, eingebracht. Über eine Heizung erfolgt eine Aushärtung des polymerisierbaren Kunststoffs.

Über die Jahre sind zahlreiche Verbesserungen dieser Lösung vorgeschlagen worden. Ein Beispiel hierfür ist die DE-OS 2 312 934. Bei dieser Lösung ist im Bereich des Füllkanals eine Art Kragen aus einem Isoliermaterial vorgesehen, und das Härten erfolgt in einem Heizbad aus kochendem Wasser.

Ferner ist es bereist vorgeschlagen worden, dem Füllkanal gegenüberliegend einen Entlüftungskanal in der Küvette anzubringen. Die durch das Füllen verdrängte Luft kann so entweichen und der Füllungsgrad des Formraums lässt sich verbessern. Allerdings müssen dann für das Erhitzen in kochendem Wasser sowohl der Füllkanal als auch der Entlüftungskanal abgedichtet werden, wobei in vorteilhafter Ausgestaltung auch beispielsweise drei Füllkanäle und drei Entlüftungskanäle vorgesehen sein können, die dann getrennt abgerichtet werden müssten. Dies ist umständlich und verzögert die Herstellung der Prothese oder des sonstigen dentalmedizinischen Formteils.

Die DE 17 79 104 A1 beschreibt ebenfalls, hinsichtlich ihrer Durchlässigkeit unveränderliche, Einsätze, die sich in Luftabsaugkanälen befinden.

Die DE 26 15 938 beschreibt überdies schwamm- oder zigarettenfilterartige Filterelemente, die für das Gießmaterial undurchlässig, für das ausströmende Gas hingegen durchlässig sein sollen.

In der Veröffentlichung "Entlüftungsstopfen für Spritzgießwerkzuge", Kunststoffe, Carl Hanser Verlag, München, Bd. 74, Nr. 2, Februar 1984 (1984-02), Seite 68, XP001176448, ISSN: 0023-5563 werden zur Vermeidung von Brandstellen oder einer schlechten Verbindung der Spritzgießmaterialien Entlüftungsstopfen aus luftdurchlässigem, rostfreiem Sintermetall beschrieben.

In der GB 2 224 460 A wird eine Spritzgussform für durch Mikrowellenstrahlung härtbare Kunstharzmassen beschrieben, welche u.a. eine sich nach außen hin verjüngende Aulassöffnung aufweist, in die ein sich ebenfalls zur Ausströmseite hin verjüngendes Verschlusselement eingesetzt wird. Dieses Verschlusselement soll durch in den Auslasskanal eindringende Gießmasse nach außen gedrückt werden und somit in der Lage sein können, die Auslassöffnung bei vollständiger Befüllung der Gussform zu verschließen. Nachteilig hierbei ist, dass im ungünstigsten Fall die Gießmasse bereits in den Auslasskanal eindringen und diesen verschließen kann, bevor die Gussform bereits vollständig befüllt ist,was unerwünschte Lufteinschlüsse verursachen kann.

Demgegenüber liegt der Erfindung die Aufgabe zugrunde, eine Küvette gemäß dem Oberbegriff von Anspruch 1 zu schaffen, die besser handhabbarer ist und universell eingesetzt werden kann.

Diese Aufgabe wird erfindungsgemäß durch Anspruch 1 gelöst. Vorteilhafte Weiterbildungen ergeben sich aus den abhängigen Ansprüchen.

Erfindungsgemäß besonders günstig ist es, dass mit dem Filterelement in dem Entlüftungskanal der Entlüftungskanal gleichsam automatisch verschlossen wird, sobald der Formraum gefüllt ist. Hierzu ist es vorgesehen, den Entlüftungskanal in an sich bekannter Weise dem Füllkanal gegenüberliegend anzuordnen.

Die Anordnung sollte zweckmäßig so erfolgen, dass sichergestellt ist, dass mit dem Eintreten des polymerisierbaren Kunststoffs in den Entlüftungskanal kein weiterer Formraum verbleibt, der nicht mit polymerisierbarem Kunststoff gefüllt ist. Hierzu können auch mehrere Entlüftungskanäle an den hierfür geeigneten Stellen vorgesehen sein, und bevorzugt sind die Entlüftungs-Teilkanäle so geführt, dass sie in einen gemeinsamen Entlüftungskanal münden, der wiederum das Filterelement aufweist.

Das Filterelement ist bevorzugt als austauschbares Teil mit einer Porenstruktur vorgesehen, das in eine Aufnahmeaussparung einsteckbar ist. Die aus dem Formraum austretende Luft vermag ohne weiteres das Filterelement zu durchströmen, während beim Kontakt mit polymerisierbarem Kunststoff ein Verschluss der Poren entsteht. Dies wird chemisch durch Ausnutzen der in dem polymerisierbaren Kunststoff in Rohzustand vorhandenen Monomere realisiert. Durch den Kontakt mit den Monomeren wird praktisch eine Formänderung bzw. Volumenvergrößerung des Filterelements erfolgen, die zum Verschluss der Poren ausgenutzt wird.

Es versteht sich, dass das Filterelement offenporig ausgebildet sein muss. Anstelle einer offenporigen Schwammstruktur lässt sich jedoch auch ein wabenartiger Körper mit Strömungskanälen einsetzen, der von gasförmigen Medien leicht durchströmbar ist. Das Filterelement kann auch nach der Art eines Siebes ausgebildet sein, wobei es in diesem Fall bevorzugt als Formkörper hergestellt ist.

Erfindungsgemäß besonders günstig ist es, wenn der Einlassöffnung benachbart ein Isolator vorgesehen ist, der zur Wärmedämmung dient. Hierdurch ist sichergestellt, dass das durch den Füllkanal strömende Material nicht vorzeitig erwärmt wird. Die Küvette lässt sich bevorzugt mit einer preisgünstigen Heizung beheizen, bei Bedarf auch über ein Wasserbad in kochendem Wasser. Auch hier agiert das Filterelement dann als Materialsperre gegenüber dem polymerisierbaren Kunststoff. Die Heizung kann auch dem Filterelement benachbart vorgesehen sein, um das Durchhärten des Kunststoffs dort, also an der aus Richtung der Füllung gesehen entfernten Stelle zu starten.

Bevorzugt ist jedoch der Füllkanal mit einem Isolator versehen, der es verhindert, dass das dort eintretende Kunststoffmaterial umgehend erwärmt wird. Dies erlaubt es, die Heizung grossflächig und ohne örtliche Fixierung zu realisieren, so dass auch ein wenig temperaturbeständiges Filterelement einsetzbar ist. Der Isolator verhindert dann den raschen Temperaturaufbau bereits im Füllkanal, so dass lediglich der Formraum heiss ist und ein Nachpressen durch den Spritzgießvorgang während des Aushärtens erfolgt. Die Qualität des so erzeugten Formteils ist deutlich besser, gerade auch wenn als wesentlicher Bestandteil für den zu polymerisierenden Kunststoff Polymethylmetacrylat verwendet wird.

Bevorzugt ist das Filterelement über den dortigen Entlüftungskanal mit einer Saugvorrichtung verbunden, die einen Unterdruck erzeugt. Dadurch wird es möglich, den Pressdruck für die Bereitstellung des Kunststoffs um beispielsweise knapp 1 bar zu reduzieren.

Das Filterelement kann an einer beliebigen geeigneten Stelle in dem Entlüftungskanal vorgesehen sein. Bevorzugt ist es jedoch etwas beabstandet, beispielsweise etwa 1 cm beabstandet von dem Formraum in dem Entlüftungskanal angeordnet. Hierdurch ist auch sichergestellt, dass keine Rückverunreinigung des polymerisierbaren Kunststoffs über das Filterelement erfolgen kann.

Erfindungsgemäß ist das Filterelement aus einem offenporigen Material, insbesondere aus einem offenporigen Kunststoff gebildet der beim Zusammentreffen mit Monomeren, die in dem polymerisierbaren Kunststoff enthalten sind, chemisch eine Formänderung bzw. Volumenvergrösserung des Filterelements bewirkt und die Poren mindestens teilweise verschließt.

Erfindungsgemäß besonders günstig ist es, dass das Filterelement im Ausgangszustand, also vor der Verbindung mit dem polymerisierbaren Kunststoff, offenporig mit einer Porengröße von 1 Mikrometer bis 250 Mikrometer, bevorzugst zwischen 50 und 150 Mikrometer, ausgebildet ist.

Erfindungsgemäß besonders günstig ist es, dass eine Saugvorrichtung an den Entlüftungskanal angeschlossen ist, über welche der Entlüftungskanal zumindest vor dem Pressvorgang unter Unterdruck setzbar ist.

Erfindungsgemäß besonders günstig ist es, dass der Pressdruck des eingebrachten polymerisierbaren Kunststoffs 1 bis 20 bar beträgt.

Erfindungsgemäß besonders günstig ist es, dass ein Wärmeisolator, inbesondere in zweigeteilter Form, der Einlassöffnung benachbart angeordnet ist, und dass die Einlassöffnung sich insbesondere durch den Wärmeisolator hindurch erstreckt.

Erfindungsgemäß besonders günstig ist es, dass ein Aufnahmebereich für die Aufnahme des polymerisierbaren Kunststoffs aus einem wärmedämmenden Material, insbesondere aus einem wärmedämmenden Kunststoff, ausgebildet ist.

Erfindungsgemäß besonders günstig ist es, dass der Aufnahmebereich aus zwei Teilen ausgebildet ist und insbesondere je ein Teil des Wärmeisolators und je ein Teil des Aufnahmebereichs zueinander einstückig ausgebildet sind.

Erfindungsgemäß besonders günstig ist es, dass das Filterelement als Formkörper ausgebildet ist.

Erfindungsgemäß besonders günstig ist es, dass das Filterelement in einer, einen Teil des Entlüftungskanals bildenden Aufnahmeausparung wenigstens einer der Küvettenhälften aufnehmbar ist, nachdem ein entsprechender, vorzugsweise aus Wachs gebildeter Platzhalter entfernt worden ist.

Erfindungsgemäß besonders günstig ist es, dass das Filterelement vor Einsatz in die Küvette mit einer Plazierhilfe verbunden ist, die insbesondere über eine Sollbruchstelle mit dem eigentlichen Filterelement verbunden ist und nach dem Einsatz des Filterelements in die Küvette entfernbar ist.

Erfindungsgemäß besonders günstig ist es, dass der Entlüftungskanal im Wesentlichen gegenüber der Einlassöffnung angeordnet ist.

Erfindungsgemäß besonders günstig ist es, dass eine Injektionsvorrichtung über eine Heizvorrichtung verfügt, welche mit einem der Einfüllöffnung gegenüberliegenden Bereich der Küvette zusammen wirkt.

Erfindungsgemäß besonders günstig ist es, dass eine Heizeinrichtung für die Küvette dem Entlüftungskanal benachbart und von der Einlassöffnung deutlich stärker beabstandet als von dem Entlüftungskanal angeordnet ist.

Erfindungsgemäß besonders günstig ist es, dass die Heizeinrichtung den Entlüftungskanal und insbesondere höchstens einen vorderen Teil, bevorzugt weniger als ein Drittel und insbesondere lediglich ein Fünftel des Aufnahmebereichs der Küvette überlappt.

Erfindungsgemäß besonders günstig ist es, dass der Entlüftungskanal eine Mehrzahl, insbesondere drei Entlüftungs-Teilkanäle aufweist, die an den Aufnahmebereich angeschlossen sind und zum Entlüftungskanal zusammengeführt sind.

Erfindungsgemäß besonders günstig ist es, dass die Filtervorrichtung sich stromab von Entlüftungs-Teilkanälen, insbesondere unmittelbar anschließend an eine Mündung der Entlüftungs-Teilkanäle in den Entlüftungskanal erstreckt.

Erfindungsgemäß besonders günstig ist es, dass für jeden Entlüftungs-Teilkanal, die sich von dem Aufnahmebereich weg erstrecken, ein Filterelement vorgesehen ist.

Erfindungsgemäß besonders günstig ist es, dass das Filterelement in eine Aufnahmeaussparung mindestens einer der Küvettenhälften einsteckbar ist und nach Abschluss der Polymerisation und Trennen der Küvettenhälften entfernbar ist.

Erfindungsgemäß besonders günstig ist es, dass der den Entlüftungs-Teilkanälen gegenüberliegend, und insbesondere zu diesen symmetrisch, Einlassöffnungen ausgebildet sind.

Weitere Vorteile, Einzelheiten und Merkmale ergeben sich aus der nachfolgenden Beschreibung eines Ausführungsbeispiels anhand der Zeichnung. Es zeigen:
- Fig. 1: eine schematische Ansicht einer erfindungsgemäßen Küvette, die ein Filterelement aufweist; und
- Fig. 2: eine schematische Ansicht eines Teils der Küvette gemäß Fig. 1, wobei die Funktion des Filterelements besser ersichtlich ist.

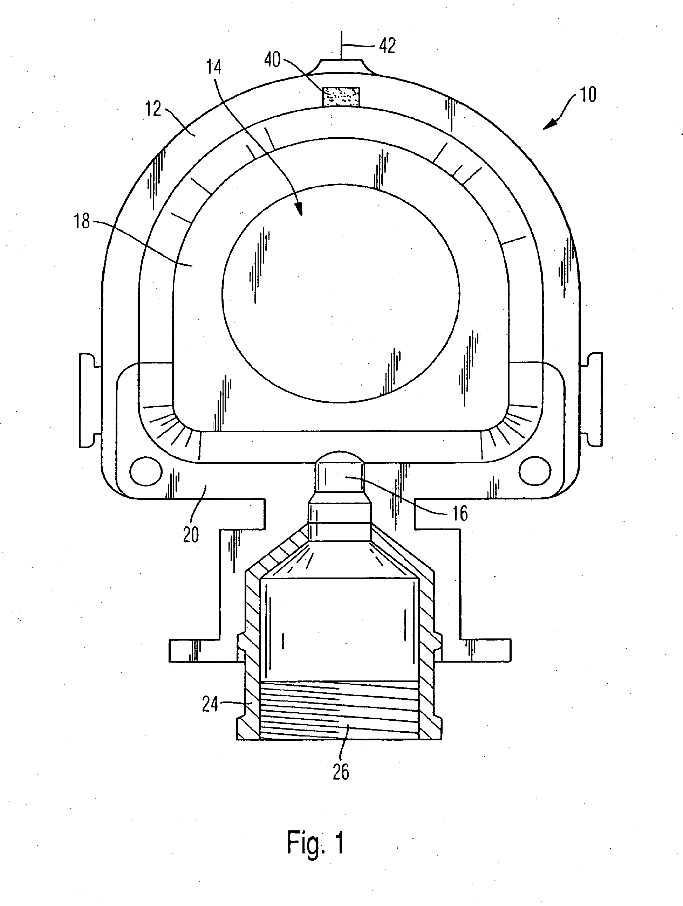

Aus Fig. 1 ist eine Küvette 10 ersichtlich, die aus zwei zu einander passenden Küvettenformschalen besteht, von denen eine Küvettenformschale 12 aus Fig. 1 ersichtlich ist. In an sich bekannter Weise bilden die Küvettenformschalen einen Formraum 14, der beispielsweise für die Herstelllung einer Prothese geeignet ausgebildet ist.

Der Formraum 14 ist über einen Füllkanal 16 mit polymerisierbarem Kunststoff befüllbar. Während die Küvettenformschalen ein Gehäuse 18 aus Aluminium aufweisen, ist der Füllkanal 16 von einem Isolator 20 umgeben, der beispielsweise aus einem gut wärmedämmenden Kunststoff bestehen kann.

Das durch den Füllkanal 16 einströmende Material, also das polymerisierbare Kunststoffmaterial, verbleibt auf diese Weise dem Füllkanal benachbart auf der Fülltemperatur, während das Gehäuse 18 der Küvette 10 von einer Heizeinrichtung mit Wärme beaufschlagt wird und dort die Polymerisation raschen von statten geht.

Der Isolator 20 erstreckt sich bevorzugt über die gesamt Breite des rückwärtigen Bereichs der Küvette 10, so dass auch dort keine vorzeitige Aushärtung stattfindet.

Das Material des Isolators 20 weist eine geringe Wärmeleitfähigkeit auf, ist jedoch so stabil, dass es für die Aufnahme eines Druckstutzens 24 geeignet ist, an den über ein Innengewinde 26 die Pressvorrichtung für die Einbringung des Kunststoffs anschliessbar ist.

Erfindungsgemäß weist die Küvette 10 im vorderen Bereich, also dem Füllkanal 16 gegenüberliegend, ein Filterelement 40 auf, das als poröser Körper ausgebildet ist und in einem schematisch dargestellten Entlüftungskanal 42 angeordnet ist.

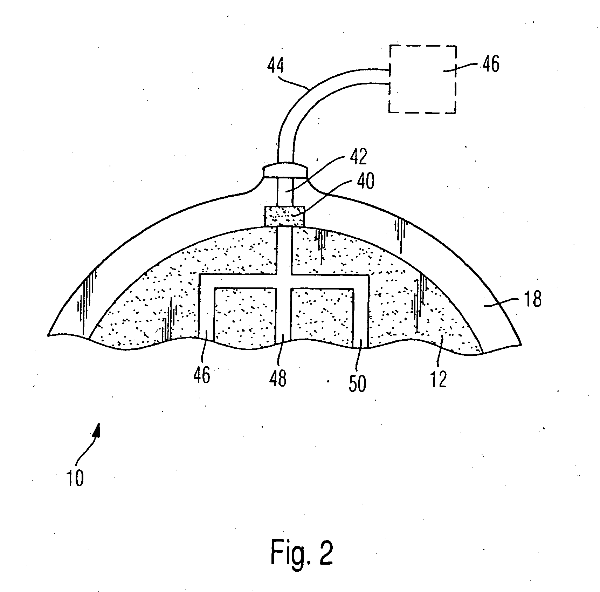

Der Aufbau des Filterelements und die Anordnung im Übrigen ist aus Fig. 2 besser ersichtlich. Das Filterelement 40 ist in dem Gehäuse 18 der Küvette 10 aufgenommen. Dort ist eine hierfür geeignete Aufnahmeaussparung ausgebildet, beispielsweise in Forme einer rechteckigen Tasche, durch die hindurch der Entlüftungskanal 42 geleitet wird. Der Entlüftungskanal 42 ist über eine Unterdruckleitung 44 mit einer Saugvorrichtung 46 verbunden, um die Entlüftung des Formraums 14 zu erleichtern.

Das Filterelement 40 ist seitlich an dem Gehäuse 18 mit den dort ausgebildeten Schultern abgestützt. Die Schultern des Gehäuses nehmen den Druck auf, der auf das Filterelement 40 ausgeübt wird, wenn es von Material aus dem Formraum 10 beaufschlagt wird. Dementsprechend ist die lichte Weite des Entlüftungskanals 42 geringer als die Breite des Filterelements 40.

In dem dargestellten Ausführungsbeispiel ist ein Filterelement 40 gemeinsam für eine Mehrzahl von Entlüftungs-Teilkanälen vorgesehen, wobei aus Fig. 2 drei Entlüftungs-Teilkanäle 46, 48 und 50 ersichtlich sind. Die Entlüftungs-Teilkanäle 48 bis 50 münden gemeinsam in den Entlüftungskanal 42, so dass es möglich ist, mit lediglich einer Filtereinrichtung auszukommen.

Die Filtereinrichtung 40 ist bevorzugt als Einmal-Filterelement ausgebildet. Sie ist ein im Wesentlichen quaderförmiger Körper, der über eine Plazierhilfe in die Aufnahmeausnehmung einsteckbar ist. Die Plazierhilfe kann wie eine Lasche ausgebildet sein, die über eine Sollbruchstelle mit dem Filterelement 40 verbunden ist. Nach Entformen der Küvettenformschalen und Abschluss des Spritzgießvorgangs wird das Filterelement aus der Aufnahmeausparung entfernt und die Küvette steht für die Aufnahme eines neuen Filterelements 40 bereit.

Die Ausgestaltung des Filterelements 40 ist so gewählt, dass auch bei dem maximal im Betrieb benutzten Differenzdruck zwischen dem Unterdruck der Saugvorrichtung 44 und dem Pressdruck im Füllkanal 16 kein Durchdrücken von polymerisierbarem Material durch das Filterelement 40 erfolgt. Damit ist gewährleistet, dass auch die Unterdruckleitung 44 und auch die Saugvorrichtung 46 nicht von dem polymerisierbaren Kunststoff verunreinigt wird.

## Patentansprüche

1. Küvette zum Herstellen, insbesondere zum Spritzgießen, von dentalmedizinischen Formteilen, mit mindestens zwei Küvettenformschalen, über welche ein Formraum für das Einbringen von polymerisierbarem Kunststoff über einen Füllkanal bildbar ist, und mit einem Entlüftungskanal für die beim Befüllen des Formraums entweichende Luft, wobei der Entlüftungskanal (42) ein Filterelement (40) aufweist, dessen Durchlässigkeit für Luft sich automatisch ändert, insbesondere reduziert, sobald es mit dem polymerisierbaren Kunststoff in Verbindung kommt, wobei das Filterelement (40) aus einem offenporigen Material gebildet ist,
**dadurch gekennzeichnet, dass**
beim Zusammentreffen des Filterelements (40) mit Monomeren, die in dem polymerisierbaren Kunststoff enthalten sind, chemisch eine Formänderung bzw. Volumenvergrösserung des Filterelements erfolgt die zum mindestens teilweisen Verschluss der Poren ausgenutzt wird.

2. Küvette nach Anspruch 1, **dadurch gekennzeichnet, dass** das Filterelement (40) aus einem offenporigen Kunststoff gebildet ist, der beim Zusammentreffen mit den in dem polymerisierbaren Kunststoff enthaltenen Monomeren aufquillt und die Poren mindestens teilweise verschließt.

3. Küvette nach einem der vorhergehenden Ansprüche, **dadurch gekennzeichnet, dass** das Filterelement (40) im Ausgangszustand, also vor der Verbindung mit dem polymerisierbaren Kunststoff, offenporig mit einer Porengröße von 1 Mikrometer bis 250 Mikrometer, bevorzugst zwischen 50 und 150 Mikrometer, ausgebildet ist.

4. Küvette nach einem der vorhergehenden Ansprüche, **dadurch gekennzeichnet, dass** eine Saugvorrichtung (46) an den Entlüftungskanal (42) angeschlossen ist, über welche der Entlüftungskanal (42) zumindest vor dem Pressvorgang unter Unterdruck setzbar ist.

5. Küvette nach Anspruch 4, **dadurch gekennzeichnet, dass** der Pressdruck des eingebrachten polymerisierbaren Kunststoffs 1 bis 20 bar beträgt.

6. Küvette nach einem der vorhergehenden Ansprüche, **dadurch gekennzeichnet, dass** ein Wärmeisolator (20), inbesondere in zweigeteilter Form, der Einlassöffnung benachbart angeordnet ist, und dass die Einlassöffnung sich insbesondere durch den Wärmeisolator (20) hindurch erstreckt.

7. Küvette nach einem der vorhergehenden Ansprüche, **dadurch gekennzeichnet, dass** ein Aufnahmebereich für die Aufnahme des polymerisierbaren Kunststoffs aus einem wärmedämmenden Material, insbesondere aus einem wärmedämmenden Kunststoff, ausgebildet ist.

8. Küvette nach einem der vorhergehenden Ansprüche, **dadurch gekennzeichnet, dass** der Aufnahmebereich aus zwei Teilen ausgebildet ist und insbesondere je ein Teil des Wärmeisolators (20) und je ein Teil des Aufnahmebereichs zueinander einstückig ausgebildet sind.

9. Küvette nach einem der vorhergehenden Ansprüche, **dadurch gekennzeichnet, dass** das Filterelement (40) als Formkörper ausgebildet ist.

10. Küvette nach einem der vorhergehenden Ansprüche, **dadurch gekennzeichnet, dass** das Filterelement (40) in einer, einen Teil des Entlüftungskanals bildenden Aufnahmeausparung wenigstens einer der Küvettenhälften aufnehmbar ist, nachdem ein entsprechender, vorzugsweise aus Wachs gebildeter Platzhalter entfernt worden ist.

11. Küvette nach einem der vorhergehenden Ansprüche, **dadurch gekennzeichnet, dass** das Filterelement (40) vor Einsatz in die Küvette (10) mit einer Plazierhilfe verbunden ist, die insbesondere über eine Sollbruchstelle mit dem eigentlichen Filterelement (40) verbunden ist und nach dem Einsatz des Filterelements (40) in die Küvette (10) entfernbar ist.

12. Küvette nach einem der vorhergehenden Ansprüche, **dadurch gekennzeichnet, dass** der Entlüftungskanal im Wesentlichen gegenüber der Einlassöffnung angeordnet ist.

13. Verwendung der Küvette nach einem der Ansprüche 1 bis 12 in einer Injektionsvorrichtung, wobei die Injektionsvorrichtung über eine Heizvorrichtung verfügt, welche mit einem der Einfüllöffnung gegenüberliegenden Bereich der Küvette zusammen wirkt.

## Claims

1. A cuvette for production, in particular for injection molding, of dental molded parts, with at least two cuvette mold shells via which a mold cavity can be formed for introduction of polymerizable plastic through a filling channel, and with an air release channel for the air that escapes during filling of the mold cavity, wherein the air release channel (42) has a filter element (40) whose permeability for air changes automatically, in particular decreases, as soon as it comes into contact with the polymerizable plastic, wherein the filter element (40) is made of an open-pore material, **characterized in that**, upon contact of the filter element (40) with monomers container in the polymerizable plastic, a change of shape or an increase in volume of the filter element takes place chemically which is used for at least partially closing the pores.

2. The cuvette as claimed in claim 1, **characterized in that** the filter element (40) is made of an open-pore plastic which, upon contact with the momomers contained in the polymerizable plastic, swells and at least partially closes the pores.

3. The cuvette as claimed in one of the preceding claims, **characterized in that** the filter element (40) in the starting state, that is to say before contact with the polymerizable plastic, has an open-pore design with a pore size of 1 micrometer to 250 micrometers, preferably between 50 and 150 micrometers.

4. The cuvette as claimed in one of the preceding claims, **characterized in that** a suction device (46) is attached to the air release channel (42), and an underpressure can be established in the air release channel (42) via the suction device (46), at least before the pressing operation.

5. The cuvette as claimed in claim 4, **characterized in that** the molding pressure of the introduced polymerizable plastic is 1 to 20 bar.

6. The cuvette as claimed in one of the preceding claims, **characterized in that** a heat insulator (20), in particular in two-part form, is arranged adjacent to the inlet opening, and **in that** the inlet opening extends in particular through the heat insulator (20).

7. The cuvette as claimed in one of the preceding claims, **characterized in that** a receiving area for accommodating the polymerizable plastic is made of a heat-insulating material, in particular of a heat-insulating plastic.

8. The cuvette as claimed in one of the preceding claims, **characterized in that** the receiving area is made up of two parts, and, in particular, one part of the heat insulator (20) and one part of the receiving area are designed integral with one another.

9. The cuvette as claimed in one of the preceding claims, **characterized in that** the filter element (40) is designed as a molded body.

10. The cuvette as claimed in one of the preceding claims, **characterized in that** the filter element (40) can be accommodated in a receiving recess belonging to at least one of the cuvette halves and forming part of the air release channel, after a corresponding space holder, preferably formed of wax, has been removed.

11. The cuvette as claimed in one of the preceding claims, **characterized in that** the filter element (40), before insertion into the cuvette (10), is connected to a positioning aid which is joined to the actual filter element (40) in particular via a predetermined break point and can be removed after insertion of the filter element (40) into the cuvette (10).

12. The cuvette as claimed in one of the preceding claims, **characterized in that** the air release channel is arranged substantially opposite the inlet opening.

13. A use of the cuvette as claimed in claim 1 through 12 in an injection device, wherein the injection device comprises a heating device which interacts with an area of the cuvette lying opposite the inlet opening.

## Revendications

1. Cuvette pour la fabrication, en particulier pour l'injection, de moulures dentaires, ayant au moins deux coquilles de moule, par lesquelles une cavité de moulage pour l'introduction d'une matière plastique polymérisable par un canal de remplissage est réalisable et ayant une gaine de ventilation pour l'air d'échappement lors du remplissage de la cavité de moulage, où la gaine de ventilation (42) présente un élément filtrant (40), dont la perméabilité à l'air se modifie automatiquement, en particulier se réduit, dès qu'il rentre en contact avec la matière plastique polymérisable, où l'élément filtrant (40) est formé d'un matériau poreux,
**caractérisée en ce que**, lorsque l'élément filtrant (40) rentre en contact avec des monomères contenus dans la matière plastique polymérisable, il s'ensuit chimiquement un changement de forme ou augmentation de volume de l'élément filtrant, qui est exploitée pour la fermeture au moins partielle des pores.

2. Cuvette selon la revendivation 1 **caractérisée en ce que**, l'élément filtrant est formé d'un matériau poreux, en particulier d'un plastique poreux, qui, lorsqu'il rentre en contact avec les monomères contenues dans la résine polymérisable, gonfle et ferme au moins partiellement les pores.

3. Cuvette selon l'une des revendications précédentes, **caractérisée en ce que** l'élément filtrant (40) dans son état initial, c'est-à-dire avant de rentrer en contact avec la matière plastique polymérisable, est formé à pores ouverts de pores ayant une taille comprise entre 1 micron et 250 micromètres, de préférence entre 50 et 150 micromètres.

4. Cuvette selon l'une des revendications précédentes, **caractérisée en ce qu'**un dispositif d'aspiration (46) est attaché à la gaine de ventilation (42), par lequel la gaine de ventilation (42) est susceptible d'être mise sous vide au moins avant l'opération de pressage.

5. Cuvette selon la revendication 4, **caractérisée en ce que** la pression des plastiques polymérisables introduits est de 1 à 20 bar.

6. Cuvette selon l'une des revendications précédentes, **caractérisée en ce qu'**un isolant thermique (20), en particulier formé en deux parties, est configuré contigu à l'orifice d'entrée, et que l'orifice d'entrée s'étend en particulier à travers l'isolant thermique (20).

7. Cuvette selon l'une des revendications précédentes, **caractérisée en ce qu'**une zone de réception pour recevoir de la matière plastique polymérisable est formée d'un matériau d'isolation thermique, surtout un isolant thermique en plastique.

8. Cuvette selon l'une des revendications précédentes, **caractérisée en ce que** la zone de réception est formée en deux pièces, et en particulier une partie de l'isolant thermique (20) et une partie de la zone d'accueil sont formées chacune par rapport à l'autre en un seul morceau.

9. Cuvette selon l'une des revendications précédentes, **caractérisée en ce que** l'élément filtrant (40) est formé comme un corps moulé.

10. Cuvette selon l'une des revendications précédentes, **caractérisée en ce que** l'élément filtrant (40) est àdapté à être reçu dans un logement de réception formant partie de la gaine de ventilation d'au moins l'une des moitiés de la cuvette, après enlèvement d'un espace réservé correspondant, de préférence en cire.

11. Cuvette selon l'une des revendications précédentes, **caractérisée en ce que** l'élément filtrant (40) avant d'être inséré dans la cuvette (10) est relié à un aide au placement, qui est relié en particulier par un point destiné à la rupture avec l'élément filtrant lui-même (40) et est amovible après l'insertion de l'élément filtrant dans la cuvette (10).

12. Cuvette selon l'une des revendications précédentes, **caractérisée en ce que** la gaine de ventilation est disposée essentiellement en face de l'orifice d'entrée.

13. Utilisation de la cuvette selon l'une des revendications 1 à 12 dans un dispositif d'injection, où le dispositif d'injection dispose d'un dispositif de chauffage qui agit ensemble avec une zone de la cuvette en face de l'orifice de remplissage.
